# EUROPEAN PATENT SPECIFICATION

(11) **EP 2 011 321 B1**
(45) Date of publication and mention of the grant of the patent: **22.04.2015**
(21) Application number: 06839675.3
(22) Date of filing: 02.11.2006
(51) Int. Cl.: H04M 1/725, H04N 5/232, H04N 7/14

(54) **REMOTE CONTROL AND VIEWFINDER FOR MOBILE CAMERA PHONE**
FERNBEDIENUNG UND VIEWFINDER FÜR EIN MOBILKAMERATELEFON
TELECOMMANDE ET VISEUR POUR UN TELEPHONE APPAREIL PHOTO PORTABLE

(30) Priority: 27.04.2006 US 380441
(43) Date of publication of application: 07.01.2009
(73) Proprietor: Sony Ericsson Mobile Communications AB, 221 88 Lund (SE)
(72) Inventor: BLISS, Stephen, J., Cary, NC 27513 (US)
(74) Representative: Isarpatent
(86) International application number: PCT/US2006/060468
(87) International publication number: WO 2007/130146

(56) References cited:
- EP-A- 1 562 354
- WO-A-2004/023795
- DE-A1-102005 030 383
- KR-A- 2005 022 571
- BLUETOOTH AUDIO/VIDEO WORKING GROUP: "AUDIO/VIDEO REMOTE CONTROL PROFILE V1.0" INTERNET CITATION, [Online] 22 May 2003 (2003-05-22), XP002412760 Retrieved from the Internet: URL:http://bluetooth.com/NR/rdonlyres/0CD6 930C-302E-4BB8-ACA8-199066B47AD E/922/AVRCPSpescv10.pdf> [retrieved on 2006-12-22]

## Description

### BACKGROUND OF THE INVENTION

The present invention relates to the ability to control one mobile camera phone with another mobile camera phone, and more particularly to a mobile camera phone that can display the data in the viewfinder of another mobile camera phone and control the camera functions of the other mobile camera phone.

Mobile camera phones have become quite ubiquitous. Users enjoy the added functionality of having a digital camera integrated into their mobile cellular phone without having to carry an extra portable electronic device. Many times the camera is used to capture spontaneous activities involving the user and his/her friends. A typical favorite photo is a group shot of everyone associated with the user. Unfortunately, one person is required to operate the mobile camera phone which precludes that person from being in the photo. One solution to this dilemma is to use the mobile camera phone's self-timer feature that allows a user to set up a shot then have the mobile camera phone take the photo after a predetermined amount of time has elapsed. This allows the user to rush into the frame and be included in the photo. However, the user cannot preview the shot prior to taking the picture. The user can only hope he/she has set up the shot correctly and placed him or herself appropriately in the frame during the countdown period prior to taking the photo.

What is needed is a means for remotely controlling the mobile camera phone such that the user can set up the shot and manipulate the mobile camera phone while remaining a part of the shot.

Mobile camera phones may connect with other devices, such as a remote controller device, using a short range communication protocol. Such a remote controller device may control the mobile camera phone to confirm a state of a subject through the display unit of the remote controller, as described in Korean Patent Abstract 2005 0022571 to SK TELETEC Co., LTD. Also, as described in European Patent Application 1 562 354 to ALCATEL, some remote control devices can notify a user and control a mobile communication device in the event that the mobile communication device is misplaced.

Another use could be when the user cannot hold the mobile camera phone close to the subject since his presence would likely disrupt the photo opportunity, as in the case of wildlife photography. For instance, close range photos of birds can be taken undisturbed when the user is remotely operating the mobile camera phone.

### BRIEF SUMMARY OF THE INVENTION

A system, method, and device for remotely controlling the camera functions of a mobile camera phone are disclosed. The mobile camera phone and another device are communicable with one another using the Bluetooth(TM) protocol. Each includes a Bluetooth module that establishes a Bluetooth wireless RF connection with one another such that data and instructions can be exchanged between the mobile camera phone and the other device. The other device receives data representative of the mobile camera phone's viewfinder. A camera application in the other device is coupled with the Bluetooth module for establishing a master/slave relationship with a corresponding camera application in the mobile camera phone. The other device sends camera control commands to the mobile camera phone wherein the camera control commands can manipulate camera settings, take a picture, and dispose of the resultant picture. The other device further includes a display for displaying the real-time data representative of the mobile camera phone's viewfinder and a user interface coupled with the display that provides a means of inputting data to manipulate the camera application.

The camera settings include one or more of zoom, focus, flash/lighting, picture size, and picture orientation. Disposition of the resultant picture includes one or more of deleting the picture, storing the picture on the mobile camera phone, and storing the picture on the second device.

### BRIEF DESCRIPTION OF THE DRAWINGS

Figure 1 is a block diagram of a rear view and a front view of a typical mobile camera phone 100.
Figure 2 is a block diagram back of a pair of mobile camera phones communicable with one another over a Bluetooth interface.
Figure 3 is a flowchart describing processes according to an embodiment of the present invention.
Figure 4 is a logic diagram describing communication exchanges between a pair of mobile camera phones communicable with one another over a Bluetooth interface according to an embodiment of the present invention.

### DETAILED DESCRIPTION OF THE INVENTION

The present invention provides a mechanism for a Bluetooth™ mobile camera phone to communicate with another Bluetooth™ mobile camera phone for purposes of setting up a master/slave relationship that would allow one mobile camera phone to operate the other. This would be especially useful when the picture taker is also part of the picture to be taken. The picture taker could use the second mobile camera phone as a remote viewfinder to ensure the proposed shot is to his/her liking. Camera functions such as lighting, focus, and zoom could be remotely adjusted and the picture could be taken remotely. This presents an improvement over a self-timer camera function in which the user sets up the shot with the mobile camera phone then hurries to get in place before a timer elapses and the picture is taken.

For purposes of illustration, the present invention and its various embodiments are described using Bluetooth™ enabled mobile camera phones. Those of ordinary skill in the art could easily substitute other portable devices so long as each contains a Bluetooth module that permits the devices to communicate with one another. Such devices can include, but are not limited to, a digital camera, a personal digital assistant (PDA), a web cam, or any other devices that include at least a camera on one device and a display on the other device.

Moreover, while the preferred embodiment uses Bluetooth™ as a communications protocol between the two devices, other wireless options are available. 802.11 protocols such as WiFi and WiMax could be implemented as well as wireless USB. By using 802.11 protocols, the devices need not be in close proximity to one another. For instance, a stationary surveillance camera can be remotely instructed to forward its viewfinder data to another device over a network or a combination of networks that can include a mobile phone network.

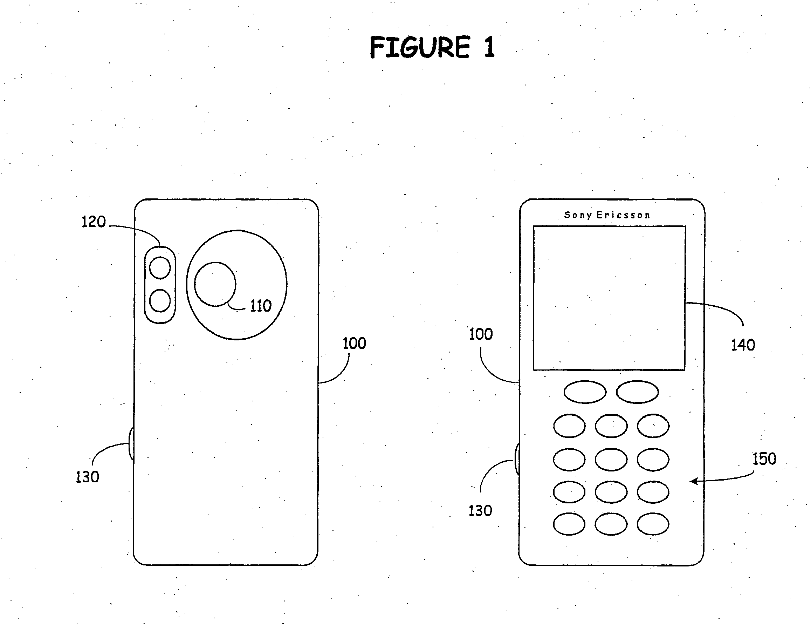

Figure 1 is a block diagram of a front view and a rear view of a typical mobile camera phone. The rear view exposes many of the camera elements such as the lens 110, the flash/lighting mechanism 120, and the shutter button 130. The front view exposes other typical mobile phone 100 elements such as the display 140 and keypad 150. The display 140 also functions as the camera viewfinder when the mobile camera phone 100 is in camera mode. Thus, any references to "the viewfinder" or "a viewfinder" are meant to refer to the mobile camera phone display 140. The shutter button 130 is one mechanism that can be used to cause the mobile camera phone to take a picture. The taking of a picture can also be controlled internally within the mobile camera phone using a mobile phone camera application.

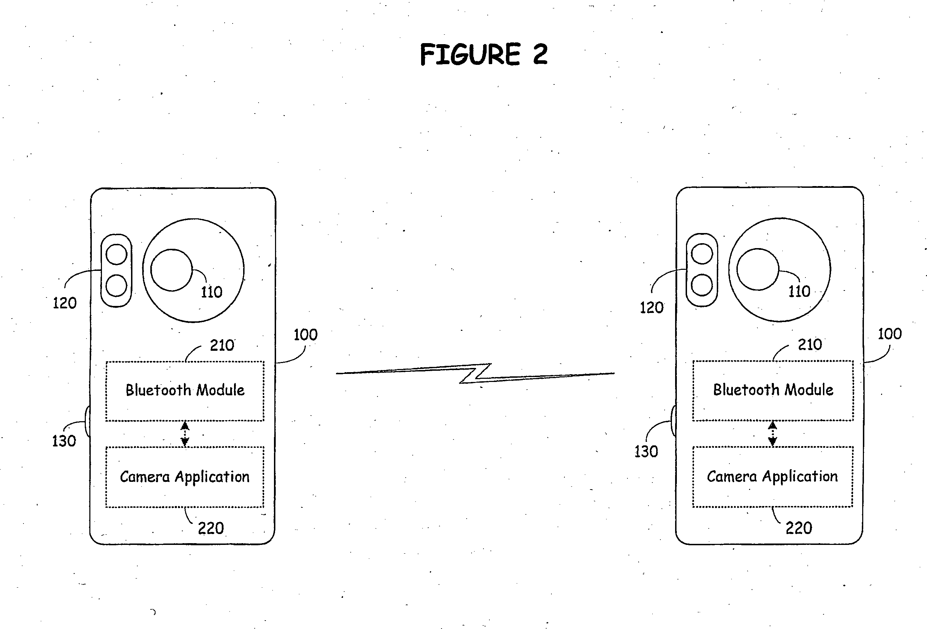

Figure 2 is a block diagram back of a pair of mobile camera phones communicable with one another over a Bluetooth™ interface. For purposes of illustration, each mobile camera phone 100 is identical to the one shown in Figure 1. As earlier mentioned, the two mobile camera phones need not be identical, however, in order for the present invention to be carried out. Included in each mobile camera phone 100 is a Bluetooth™ module 210 and a camera application 220. Also included, but not explicitly shown in Figure 2, is a processing device to control and facilitate the actions of the Bluetooth™ module 210 and a camera application 220 as well as data storage means for storing photo data captured by the mobile camera phone.

The Bluetooth™ modules are communicable with one another using the Bluetooth™ protocol. Bluetooth™ is a short range wireless RF protocol designed to replace the need for wired connections between or among various devices. The Bluetooth™ protocol provides the tools that allow two (or more) devices to discover each other's physical existence, discover one another's Bluetooth™ compatible applications, pair (connect) with one another, and exchange data with one another when within an RF wireless range.

One of the Bluetooth™ compatible applications would be the camera application 220. The camera application 220 essentially comprises the software to control the mobile phone camera. By adding Bluetooth™ functionality to the camera application 220, it allows another device to access and control the camera functions of the first mobile camera phone.

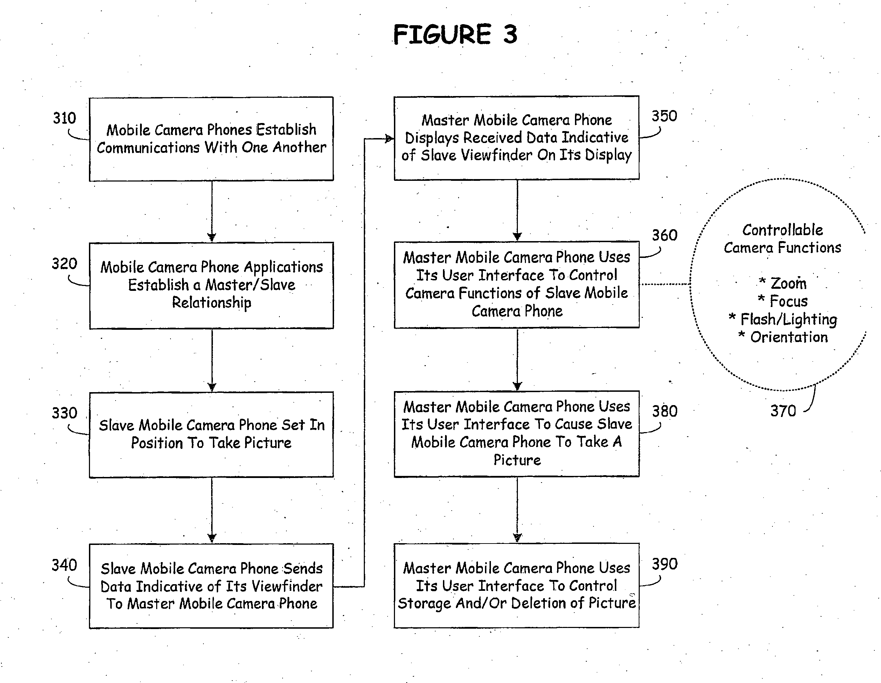

Figure 3 is a flowchart describing processes according to an embodiment of the present invention. When a user wishes to use one Bluetooth™ enabled mobile camera phone to control another Bluetooth™ enabled mobile camera phone, the first step is to have each Bluetooth™ enabled mobile camera phone establish a connection with one another 310. Typically, each mobile camera phone would have its Bluetooth™ functionality enabled and placed into a search or discovery mode. Once the two mobile camera phones find one another they can be paired together and exchange a list of compatible applications. The user can select the camera application and specify a master/slave relationship 320 between the two mobile camera phones. The master/slave relationship means that one mobile camera phone will allow itself to be controlled by the other mobile camera phone over the Bluetooth™ connection. The master/slave relationship between the two mobile camera phones implies one having the ability to control the other. It is not meant to refer to the more strict "network computer" definition of the term. In fact, the devices can be in a peer-to-peer relationship from a network perspective so long as one mobile camera phone in "take a picture" mode and the other mobile camera phone is in "push a button" mode.

At this point the slave mobile camera phone can be physically set in a position to take a photo 330. Once set up, the slave mobile camera phone transmits the data captured by the viewfinder to the master mobile camera phone 340. The master mobile camera phone then displays the data captured by the slave mobile camera phone's viewfinder on its own display 350. The user can then use the master mobile camera phone user interface (UI) to manipulate and control additional camera functions on the slave mobile camera phone 360. Some of the additional camera functions include, but are not limited to, zoom, focus, flash/lighting, picture size, picture orientation (portrait or landscape), etc 370. Once satisfied with the preview of the shot, the master mobile camera phone can be used to cause the slave mobile camera phone to take the picture 380. After the picture has been taken, the master mobile camera phone is used to control the disposition of the photo 390. Disposition includes, but is not limited to, deletion of the photo, and storage of the photo on either or both devices.

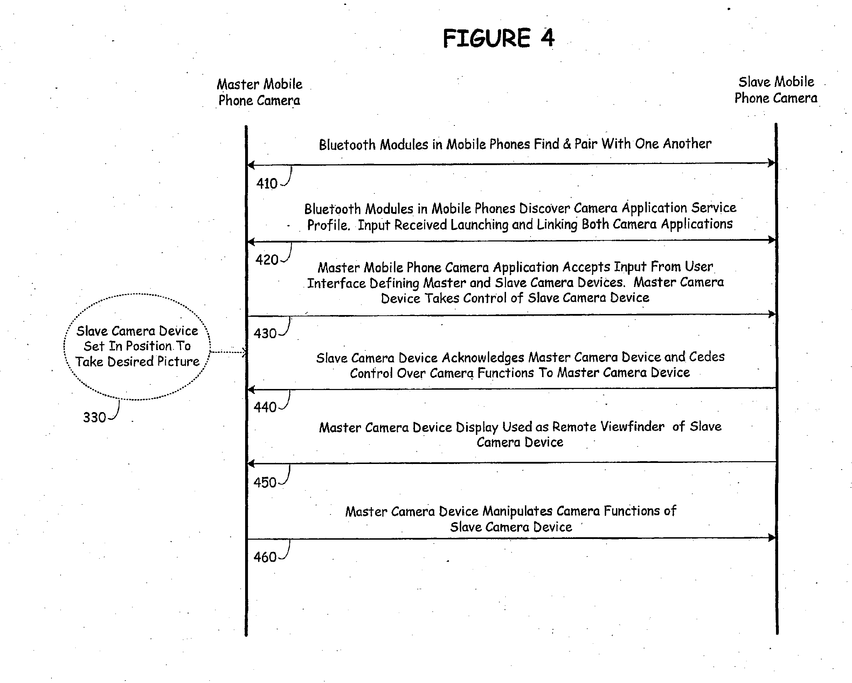

Figure 4 is a logic diagram describing communication exchanges between a pair of Bluetooth™ enabled mobile camera phones communicable with one another over the Bluetooth™ interface according to an embodiment of the present invention. The master and slave mobile phone cameras invoke their respective Bluetooth™ modules to discover and pair with one another 410. Next, the Bluetooth™ service discovery protocol (SDP) will discover the camera applications 420 in each device and link the two applications in a master/slave relationship 430. The slave mobile phone camera will acknowledge its role and cede or allow control of its camera functions by the master mobile phone camera 440. The master mobile camera phone will now receive real-time updated data representing the image captured by the slave mobile camera phone viewfinder 450. The master mobile camera phone can now manipulate the camera functions of the slave mobile camera phone 460.

As will be appreciated by one of skill in the art, the present invention may be embodied as a method, system, or computer program product. Accordingly, the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product on a computer-usable storage medium having computer-usable program code embodied in the medium.

Any suitable computer readable medium may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

Computer program code for carrying out operations of the present invention may be written in an object oriented programming language such as Java, Smalltalk, C++ or the like. However, the computer program code for carrying out operations of the present invention may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network (LAN) or a wide area network (WAN), or the connection may be made to an external computer (for example, through the Internet using an Internet Service Provider).

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowcharts and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems which perform the specified functions or acts, or combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Although specific embodiments have been illustrated and described herein, those of ordinary skill in the art appreciate that any arrangement which is calculated to achieve the same purpose may be substituted for the specific embodiments shown and that the invention has other applications in other environments. This application is intended to cover any adaptations or variations of the present invention. The following claims are in no way intended to limit the scope of the invention to the specific embodiments described herein.

## Claims

1. A method of remotely controlling the camera functions of a mobile camera phone via a second mobile camera phone, the mobile camera phone and the second mobile camera phone being communicable with one another using the Bluetooth™ protocol, the method comprising:
establishing a Bluetooth wireless RF connection between the mobile camera phone and the second mobile camera phone (310);
the method **characterized in that** the method comprises:
receiving user input, by the second mobile camera phone, indicating selection of a second camera application to run on the second mobile camera phone and a corresponding camera application to run on the mobile camera phone from a list of Bluetooth compatible applications available on both the mobile camera phone and the second mobile camera phone;
receiving user input, by the second mobile camera phone, identifying the second mobile camera phone as the master and identifying the mobile camera phone as the slave, in a master/slave relationship between the mobile camera phone and the second mobile camera phone (320), wherein the second mobile camera phone is configured to be the master or the slave and the mobile camera phone is configured to be the slave or the master, respectively;
establishing, by the second mobile camera phone, the master/slave relationship between the mobile camera phone and the second mobile camera phone in which the second mobile camera phone is the master that can control the camera functions of the mobile camera phone (320);
receiving in real-time, by the second camera phone via the Bluetooth connection, data representative of the mobile camera phone's viewfinder (340); and
sending, by the second mobile camera phone via the Bluetooth connection, camera control commands to the mobile camera phone wherein the camera control commands allow the second mobile camera phone to manipulate camera settings (360), take a picture (380), and dispose of the resultant picture (390).

2. The method of claim 1 wherein camera settings include one or more of zoom, focus, flash/lighting, picture size, and picture orientation (370).

3. The method of claim 1 wherein disposition of the resultant picture (390) includes one or more of deleting the picture, storing the picture on the mobile camera phone, and storing the picture on the second mobile camera phone.

4. A mobile camera phone (100) for remotely controlling the camera functions of a second mobile camera phone, the second mobile camera phone and the mobile camera phone (100) being communicable with one another using the Bluetooth™ protocol, the mobile camera phone comprising:
a Bluetooth module (210) for:
establishing a Bluetooth wireless RF connection with a corresponding Bluetooth module in the second mobile camera phone such that data and instructions can be exchanged between the second mobile camera phone and the mobile camera phone (100);
receiving, in real-time, data representative of the second mobile camera phone's viewfinder,
the mobile camera phone **characterized in that** the mobile camera phone comprises:
a camera application (220) coupled with the Bluetooth module (210) for:
receiving user input indicating selection of a camera application to run on the mobile camera phone and a corresponding second camera application to run on the second mobile camera phone from a list of Bluetooth compatible applications available on both the mobile camera phone and the second mobile camera phone;
receiving user input identifying the mobile camera phone is as the master and identifying the second mobile camera phone as the slave, in a master/slave relationship between the second mobile camera phone and the mobile camera phone (100), wherein the second mobile camera phone is configured to be the master or the slave and the mobile camera phone is configured to be the slave or the master, respectively;
establishing the master/slave relationship with the corresponding second camera application running on the second mobile camera phone wherein the mobile camera phone (100) is the master that can control the camera functions of the second mobile camera phone; and
sending camera control commands to the second mobile camera phone wherein the camera control commands can manipulate camera settings, take a picture, and dispose of the resultant picture, and
a display (140) for displaying the real-time data representative of the second mobile camera phone's viewfinder; and
a user interface coupled with the display (140) that provides a means of inputting data to manipulate the camera application.

5. The mobile camera phone (100) of claim 4 wherein camera settings include one or more of zoom, focus, flash/lighting, picture size, and picture orientation.

6. The mobile camera phone (100) of claim 4 wherein disposition of the resultant picture includes one or more of deleting the picture, storing the picture on the second mobile camera phone, and storing the picture on the mobile camera phone.

## Patentansprüche

1. Verfahren zum Fernsteuern der Kamerafunktionen eines Mobil-Kameratelefons über ein zweites Mobil-Kameratelefon, wobei das Mobil-Kameratelefon und das zweite Mobil-Kameratelefon unter Verwendung des Bluetooth™-Protokolls miteinander kommunizieren können, wobei das Verfahren Folgendes umfasst:
- Herstellen einer drahtlosen Bluetooth-HF-Verbindung zwischen dem Mobil-Kameratelefon und dem zweiten Mobil-Kameratelefon (310);
wobei das Verfahren **dadurch gekennzeichnet ist, dass** das Verfahren Folgendes umfasst:
- Empfangen von Nutzereingaben durch das zweite Mobil-Kameratelefon, welche die Auswahl einer zweiten Kameraanwendung, die auf dem zweiten Mobil-Kameratelefon ablaufen soll, und einer entsprechenden Kameraanwendung, die auf dem Mobil-Kameratelefon ablaufen soll, aus einer Liste von Bluetooth-kompatiblen Anwendungen, die sowohl auf dem Mobil-Kameratelefon als auch auf dem zweiten Mobil-Kameratelefon verfügbar sind, anzeigen;
- Empfangen von Nutzereingaben durch das zweite Mobil-Kameratelefon, die das zweite Mobil-Kameratelefon als den Master und das Mobil-Kameratelefon als den Slave in einer Master/Slave-Beziehung zwischen dem Mobil-Kameratelefon und dem zweiten Mobil-Kameratelefon (320) identifizieren, wobei das zweite Mobil-Kameratelefon dafür konfiguriert ist, der Master oder der Slave zu sein, und das Mobil-Kameratelefon dafür konfiguriert ist, der Slave bzw. der Master zu sein;
- Herstellen, durch das zweite Mobil-Kameratelefon, der Master/Slave-Beziehung zwischen dem Mobil-Kameratelefon und dem zweiten Mobil-Kameratelefon, bei der das zweite Mobil-Kameratelefon der Master ist, der die Kamerafunktionen des Mobil-Kameratelefons (320) steuern kann;
- Empfangen, in Echtzeit durch das zweite Kameratelefon über die Bluetooth-Verbindung, von Daten, die das Sichtfeld des Suchers (340) des Mobil-Kameratelefons darstellen; und
- Senden, durch das zweite Mobil-Kameratelefon über die Bluetooth-Verbindung, von Kamerasteuerbefehlen zu dem Mobil-Kameratelefon, wobei die Kamerasteuerbefehle es dem zweiten Mobil-Kameratelefon erlauben, Kameraeinstellungen zu verändern (360), ein Bild aufzunehmen (380) und über das resultierende Bild zu verfügen (390).

2. Verfahren nach Anspruch 1, wobei die Kameraeinstellungen eines oder mehrere von Folgendem umfassen: Zoom, Fokus, Blitz/Beleuchtung, Bildgröße und Bildausrichtung (370).

3. Verfahren nach Anspruch 1, wobei das Verfügen über das resultierende Bild (390) eines oder mehrere von Folgendem enthält: Löschen des Bildes, Speichern des Bildes auf dem Mobil-Kameratelefon und Speichern des Bildes auf dem zweiten Mobil-Kameratelefon.

4. Mobil-Kameratelefon (100) zum Fernsteuern der Kamerafunktionen eines zweiten Mobil-Kameratelefons, wobei das zweite Mobil-Kameratelefon und das Mobil-Kameratelefon (100) unter Verwendung des Bluetooth™-Protokolls miteinander kommunizieren können, wobei das Mobil-Kameratelefon Folgendes umfasst:
- ein Bluetooth-Modul (210) zum:
• Herstellen einer drahtlosen Bluetooth-HF-Verbindung mit einem entsprechenden Bluetooth-Modul in dem zweiten Mobil-Kameratelefon, so dass Daten und Instruktionen zwischen dem zweiten Mobil-Kameratelefon und dem Mobil-Kameratelefon (100) ausgetauscht werden können;
• Empfangen, in Echtzeit, von Daten, die das Sichtfeld des Suchers des Mobil-Kameratelefons darstellen,
wobei das Mobil-Kameratelefon **dadurch gekennzeichnet ist, dass** das Mobil-Kameratelefon Folgendes umfasst:
- eine Kameraanwendung (220), die mit dem Bluetooth-Modul (210) gekoppelt ist, zum:
• Empfangen von Nutzereingaben, welche die Auswahl einer Kameraanwendung, die auf dem Mobil-Kameratelefon ablaufen soll, und einer entsprechenden zweiten Kameraanwendung, die auf dem zweiten Mobil-Kameratelefon ablaufen soll, aus einer Liste von Bluetooth-kompatiblen Anwendungen, die sowohl auf dem Mobil-Kameratelefon als auch auf dem zweiten Mobil-Kameratelefon verfügbar sind, anzeigen;
• Empfangen von Nutzereingaben, die das Mobil-Kameratelefon als den Master und das zweite Mobil-Kameratelefon als den Slave in einer Master/Slave-Beziehung zwischen dem zweiten Mobil-Kameratelefon und dem Mobil-Kameratelefon (100) identifizieren, wobei das zweite Mobil-Kameratelefon dafür konfiguriert ist, der Master oder der Slave zu sein, und das Mobil-Kameratelefon dafür konfiguriert ist, der Slave bzw. der Master zu sein;
• Herstellen der Master/Slave-Beziehung mit der entsprechenden zweiten Kameraanwendung, die auf dem zweiten Mobil-Kameratelefon läuft, wobei die Mobil-Kameratelefon (100) der Master ist, der die Kamerafunktionen des zweiten Mobil-Kameratelefons steuern kann; und
• Senden von Kamerasteuerbefehlen an das zweite Mobil-Kameratelefon, wobei die Kamerasteuerbefehle Kameraeinstellungen verändern, ein Bild aufnehmen und über das resultierende Bild verfügen können,
- und eine Anzeige (140) zum Anzeigen der Echtzeitdaten, die das Sichtfeld des Suchers des zweiten Mobil-Kameratelefons darstellen; und
- eine Benutzerschnittstelle, die mit der Anzeige (140) gekoppelt ist und ein Mittel zum Eingeben von Daten bildet, um die Kameraanwendung zu handhaben.

5. Mobil-Kameratelefon (100) nach Anspruch 4, wobei die Kameraeinstellungen eines oder mehrere von Folgendem umfassen: Zoom, Fokus, Blitz/Beleuchtung, Bildgröße und Bildausrichtung.

6. Mobil-Kameratelefon (100) nach Anspruch 4, wobei das Verfügen über das resultierende Bild eines oder mehrere von Folgendem umfasst: Löschen des Bildes, Speichern des Bildes auf dem zweiten Mobil-Kameratelefon und Speichern des Bildes auf dem Mobil-Kameratelefon.

## Revendications

1. Procédé de commande à distance des fonctions d'appareil photo d'un téléphone-appareil photo mobile par le biais d'un second téléphone-appareil photo mobile, le téléphone-appareil photo mobile et le second téléphone-appareil photo mobile pouvant communiquer l'un avec l'autre en utilisant le protocole Bluetooth™, le procédé comprenant :
- établir une connexion RF sans fil Bluetooth entre le téléphone-appareil photo mobile et le second téléphone-appareil photo mobile (310) ;
le procédé étant **caractérisé en ce que** le procédé comprend :
- recevoir une entrée d'utilisateur, par le second téléphone-appareil photo mobile, indiquant la sélection d'une seconde application d'appareil photo à exécuter sur le second téléphone-appareil photo mobile et d'une application d'appareil photo correspondante à exécuter sur le téléphone-appareil photo mobile à partir d'une liste d'applications compatibles Bluetooth disponibles à la fois sur le téléphone-appareil photo mobile et le second téléphone-appareil photo mobile ;
- recevoir une entrée d'utilisateur, par le second téléphone-appareil photo mobile, identifiant le second téléphone-appareil photo mobile en tant que le maître et identifiant le téléphone-appareil photo mobile en tant que l'esclave, dans une relation maître/esclave entre le téléphone-appareil photo mobile et le second téléphone-appareil photo mobile (320), dans lequel le second téléphone-appareil photo mobile est configuré pour être le maître ou l'esclave et le téléphone-appareil photo mobile est configuré pour être l'esclave ou le maître, respectivement ;
- établir, par le second téléphone-appareil photo mobile, la relation maître/esclave entre le téléphone-appareil photo mobile et le second téléphone-appareil photo mobile, dans lequel le second téléphone-appareil photo mobile est le maître qui peut commander les fonctions d'appareil photo du téléphone-appareil photo mobile (320) ;
- recevoir en temps réel, par le second téléphone-appareil photo par le biais de la connexion Bluetooth, des données représentatives du viseur du téléphone-appareil photo de mobile (340) ; et
- envoyer, par le second téléphone-appareil photo mobile par le biais de la connexion Bluetooth, des commandes de contrôle d'appareil photo au téléphone-appareil photo mobile, dans lequel les commandes de contrôle d'appareil photo permettent au second téléphone-appareil photo mobile de manipuler des réglages d'appareil photo (360), de prendre une photo (380), et de disposer de l'image résultante (390).

2. Procédé selon la revendication 1, dans lequel les paramètres d'appareil photo comprennent un ou plusieurs du zoom, de la mise au point, du flash/de l'éclairage, de la taille de l'image, et de l'orientation de l'image (370).

3. Procédé selon la revendication 1, dans lequel la disposition de l'image résultante (390) comprend un ou plusieurs de la suppression de l'image, du stockage de l'image sur le téléphone-appareil photo mobile, et du stockage l'image sur le second téléphone-appareil photo mobile.

4. Téléphone-appareil photo mobile (100) pour commander à distance les fonctions d'appareil photo d'un second téléphone-appareil photo mobile, le second téléphone-appareil photo mobile et le téléphone-appareil photo mobile (100) pouvant communiquer avec l'un avec l'autre en utilisant le protocole Bluetooth™, le téléphone-appareil photo mobile comprenant :
- un module Bluetooth (210) pour :
• établir une connexion RF sans fil Bluetooth avec un module Bluetooth correspondant dans le second téléphone-appareil photo mobile de sorte que des données et des instructions peuvent être échangées entre le second téléphone-appareil photo mobile et le téléphone-appareil photo mobile (100) ;
• recevoir, en temps réel, des données représentatives du viseur du second téléphone-appareil photo mobile,
le téléphone-appareil photo mobile étant **caractérisé en ce que** le téléphone-appareil photo mobile comprend :
- une application d'appareil photo (220) couplée avec le module Bluetooth (210) pour :
• recevoir une entrée d'utilisateur indiquant la sélection d'une application d'appareil photo à exécuter sur le téléphone-appareil photo mobile et d'une seconde application d'appareil photo correspondante à exécuter sur le second téléphone-appareil photo mobile à partir d'une liste d'applications compatibles Bluetooth disponibles à la fois sur le téléphone-appareil photo mobile et le second téléphone-appareil photo mobile ;
• recevoir une entrée d'utilisateur identifiant le téléphone-appareil photo mobile en tant que maître et identifiant le second téléphone-appareil photo mobile en tant qu'esclave, dans une relation maître/esclave entre le second téléphone-appareil photo mobile et le téléphone-appareil mobile (100), dans lequel le second téléphone-appareil photo mobile est configuré pour être le maître ou l'esclave et le téléphone-appareil photo mobile est configuré pour être l'esclave ou le maître, respectivement ;
• établir la relation maître/esclave avec la seconde application d'appareil photo correspondante exécutée sur le second téléphone-appareil photo mobile, dans lequel le téléphone-appareil photo mobile (100) est le maître qui peut commander les fonctions d'appareil photo du second téléphone-appareil photo mobile ; et
• envoyer des commandes de contrôle d'appareil photo au second téléphone-appareil photo mobile, dans lequel les commandes de contrôle d'appareil photo peuvent manipuler des paramètres d'appareil photo, prendre une photo, et disposer de l'image résultante, et
- un dispositif d'affichage (140) pour afficher les données en temps réel représentatives du viseur du second téléphone-appareil photo mobile ; et
- une interface utilisateur couplée au dispositif d'affichage (140) qui fournit un moyen d'entrée de données pour manipuler l'application d'appareil photo.

5. Téléphone-appareil photo mobile (100) selon la revendication 4, dans lequel des paramètres d'appareil photo comprennent un ou plusieurs du zoom, de la mise au point, du flash/de l'éclairage, de la taille de l'image, et de l'orientation de l'image.

6. Téléphone-appareil photo mobile (100) selon la revendication 4, dans lequel la disposition de l'image résultante comprend un ou plusieurs de la suppression de la photo, du stockage de l'image sur le second téléphone-appareil photo mobile, et du stockage de l'image sur le téléphone-appareil photo mobile.
